# EUROPEAN PATENT SPECIFICATION

(11) **EP 0 343 983 B1**
(45) Date of publication and mention of the grant of the patent: **25.10.1995**
(21) Application number: 89305296.9
(22) Date of filing: 25.05.1989
(51) Int. Cl.: B24D 7/18

(54) **Apparatus and methods for grinding tool cutter teeth**
Verfahren und Vorrichtung zum Schleifen der Zähne eines Schneidwerkzeugs
Procédé et dispositif pour meuler les dents d'un outil coupant

(30) Priority: 27.05.1988 GB 8812706
(43) Date of publication of application: 29.11.1989
(73) Proprietor: ISELI & CO. AG, CH-6247 Schotz (CH)
(72) Inventor: Iseli, Benno, CH-6242 Schotz (CH)
(74) Representative: Russell-Rayner, Albert Patrick

(56) References cited:
- DE-B- 1 066 839
- PATENT ABSTRACTS OF JAPAN vol. 9, no. 179 (M-399)(1902) 24 July 1985,& JP-A-60 48263 (TOUKIYOU DIAMOND KOUGU SEISAKUSHO K. K.) 15 March 1985,
- PATENT ABSTRACTS OF JAPAN vol. 7, no. 59 (M-199)(1204) 11 March 1983,& JP-A-57 205021 (TAKEROU TAKEI) 16 December 1982,

## Description

This invention relates to a planar grinding wheel for forming the cutting edges of the cutting teeth of tools such as linear saw blades, band saws blades, circular saw blades or other tools having at least one cutting tooth, according to the preamble of claim 1.

Conventionally, the teeth provided for example, upon a circular saw or a band saw are arranged to form an endless series of similar teeth which upstand from the main body of the blade. In practice, the teeth include a so-called front face which extends upwardly and forwardly from the main body to the outermost edge or tip of the tooth and a rearwardly directed face called the top face which latter sweeps rearwardly downwardly from the tip to meet and merge into the base region of the front face of a rearwardly located adjacent tooth. This particular top face can also be considered in the opposite sense as a face sweeping forwardly and upwardly from the base of a first tooth front face to the tip of an adjacent second tooth immediately in front of the first tooth. The zone over which the front face of the first tooth merges with the rearmost parts of the adjacent tooth top face is conventionally called the gullet region.

For a number of reasons, of which some will be mentioned hereinafter, it is of great practical importance that the tooth formation is such that the shape or profiling of the front faces and the top faces of all of the teeth provided upon a blade or tool should conform to particular predetermined shapes and angular inter-relationships.

Present day constructions of toothed cutting tools or blades invariably involve the tipping of each tooth with a tip consisting of a material that is much harder in terms of material hardness i.e., the so-called Rockwell Hardness, greater than that of the body of the blade tooth to which the tips are mounted. These tips can be made from a wide variety of materials including materials such as Tungsten Carbide, and other carbide materials, and also other materials such as that known under the Trade Name Stellite.

In each case whatever the material from which the tip is made the tip has to be very securely attached to the associated tooth. There are a number of ways in which the tips may be securely connected to the blade or tool teeth. However, irrespective of the mode of attachment and/or the type of tip forming material, the initial shape of the tip is not normally correctly shaped or profiled such that the tip can actually provide material cutting edge or edges.

Consequently, every tip provided upon a blade or tool body has to be very carefully and accurately machined so that it has a predetermined shape or profile with respect to the body of the blade or tool.

In practice, each tooth tip has working faces of which the most common are conventionally respectively called the top face, the front face and the two side faces. In practice, all of these faces have to be machined so that the planes of the various faces bear accurately defined angular relationships to each other. The tip side faces, are located laterally of and are angularly disposed relative to the side faces of the blade or tool body. The edge along which the top face of the tip intersects the front face and the edges along which the side edges intersect the front face provide the cutting edges of the tip.

In view of the relatively small sizes of the tips and associated teeth and the relative closeness to each other the actual machining of the various working faces of the tips is, in practical terms, a very difficult operation and has created, in manufacturing processes of tipped blades and tools, many problems which in turn has lead to the development and production of often extremely complicated and expensive machines for mounting grinding wheels such that the grinding wheels can grind the various surfaces to their correct angular inter-relationships.

It has been found, in practice, that the grinding of the the tip front faces without touching the gullet region immediately adjacent to the tip is a very difficult operation to be absolutely sure that gullet grinding cannot occur whilst ensuring a complete and sufficient grinding of the front face by a grinding wheel movement which is generally inwardly directed down the front face of each tip. In practice, if the gullet regions are inadvertently ground it is likely that the unwanted grinding could lead to crack formation in the blade body and thus considerably shorten the life of the blade by ,for example, tooth breakage. Such difficulties arise not only from the form of the blade and tips but also to form and construction of the known grinding wheels. Hence, it has become a common practice after the face grinding operations to grind the gullet region adjacent to the tips to produce a smooth finish and thus correct for any inadvertant undesirably grinding the gullet regions.

This necessity for a further grinding sequence is in economic terms undesirable.

In addition to the problems arising from the physical form and construction of the grinding wheels further difficulties arise from the need to prevent the grinding operation from so overheating the material of the blade body and tooth that the operational characteristics of the material are undesirably changed. For example, excessive heating could lead to physical hardening of the tooth and/or blade body which situation has been found to result in conditions leading for instance, to early fracture of the tooth or blade body.

It is known from Japanese patent specification No 60-48263 to provide a cone shaped grinding wheel for use in grinding the teeth of saw blades. The grinding wheel has a symmetrical peripheral edge with a layer of grinding material which forms a ring-like formation at each side of the conical body of the grinding wheel which extends around the actual edge of the wheel body. The coating is of uniform thickness. The grinding fineness of the coating varies from one side of the conical periphery to the other. The cone wheel is designed to grind simultaneously the top face of one tooth, the rear face of an adjacent tooth and the gullet therebetween.

Japanese patent specification No 57-205021 similarly discloses a conical bodied grinding wheel for the same purpose. The peripheral edge of the grinding wheel is provided with a layer of grinding material of uniform thickness and is shaped so as strictly to conform to the angle between the rear face of one tooth and the front face of an adjacent tooth.

German patent specification No 1 066 839 discloses a grinding wheel formed from grinding material. The peripheral edge of the wheel is curved to avoid the grinding wheel from damamaging the gullet regions of the front face of a saw blade tooth. The grinding wheel disclosed does not involve layers of grinding material.

It is an object of the present invention to at least reduce difficulties such as above discussed in the machining of tipped blades or tools.

According to the present invention there is provided a planar grinding wheel comprising a main body having at its periphery a region covered by a layer of grinding material which enables the simultaneous grinding of the front face and gullet region of a saw blade tooth, characterised in that the peripheral edge region is of an asymmetrically shaped formation providing an angulated profile which is covered with a layer of Borazon to form the grinding layer, in that the Borazon layer has a thickness to one side of the main body periphery that is greater than the thickness of the corresponding layer of the Borazon to the other side of the main body periphery, and in that the intermediate region of the layer progressively changes in thickness in such manner as to accommodate the differences in the thicknesses of the Borazon layers to either side of the main body periphery.

For a better understanding of the invention and to show how to carry the same into effect reference will now be made to the accompanying drawings in which:-
Figure 1 very schematically illustrates a fragmentary portion of a cutter tool in the form of a band saw blade before the addition of tips;
Figure 2; very schematically illustrates a fragmentary portion of a cutter tool in the form of a band saw blade after the addition of hard material tips in the form of tip forming Stellite lengths;
Figure 3 is a schematic perspective view to a very large scale of a tip of a tooth shown in Figure 2 before being machined to a required shape.;
Figure 4 is a schematic representation to a very large scale of the tipped tooth of Figure 3 but after the tip has been machined into its operational form, the Figure also showing the outline of a tip prior to machining;
Figure 5 shows a known form of grinding wheel positioned for grinding a tip front face and illustrating its relationship to a tooth gullet;
Figure 6 is a cross-sectional view of a diametrical half of a grinding wheel profiled as to grinding in accordance with the concepts of the present invention;
Figure 7 is a section to an enlarged scale of a detail of Figure 6;
Figure 8 is a fragmentary cross-section of a portion of the periphery of a grinding wheel main body before application of a layer of grinding material thereto;
Figure 9 is a cross-section of the fragmentary portion of Figute 8 after the application of the grinding material thereto; and
Figure 18 very schematiclly illustrates a grinding wheel of the present invention when in its operational grinding position with respect to a tooth tip and associated gullet region.

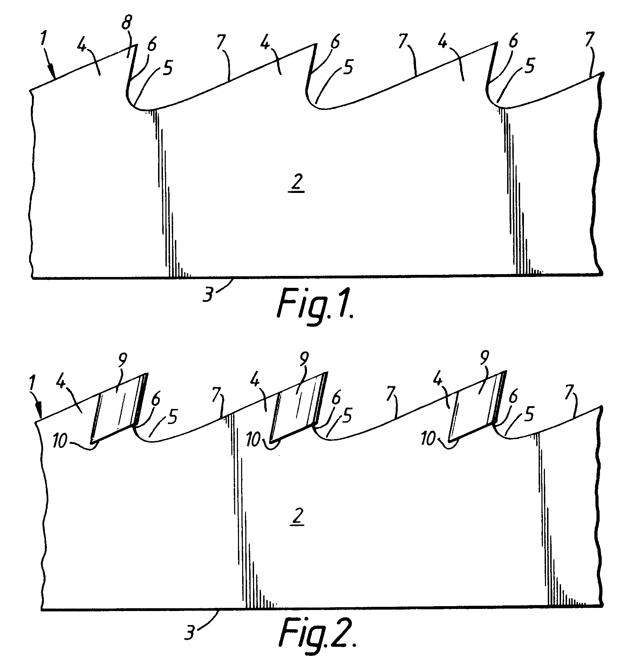

Referring now to Figure 1 a cutter tool in the form of a band saw blade 1 incorporates a main body 2 of elongate form with a uniformly straight lower edge 3 and body thickness which is very small compared to the overall depth of the main body. The other longer edge region of the main body 2 has formed there along a plurality of regularly spaced apart teeth 4. The teeth are of a similar form and are separated by a gullet region 5 providing an outwardly and forwardly inclined front face 6 to the tooth, and a second outwardly extending relatively shallower forwardly extending face which provides the rear face 7 to an adjacent tooth. The faces 6 and 7 of each tooth terminate in a sharply pointed end edge region 8.

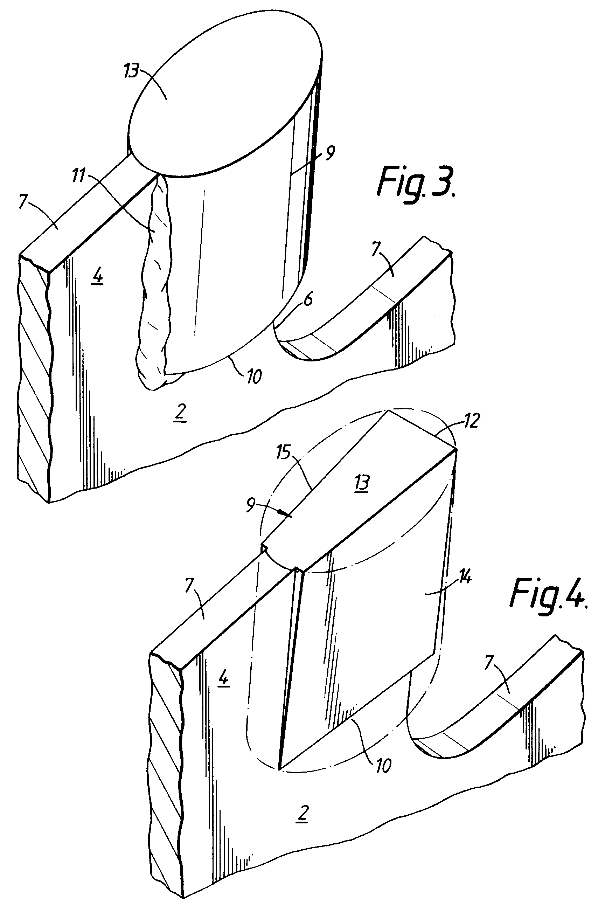

Referring now to Figures 2 and 3, these illustrate the blade of Figure 1 but after a hard material tip 9 (i.e., a short length of Stellite rod) has been mounted to the teeth 4. Each tip 9 provides an extension to the associated tooth 4 and is at least partially nested into the material of the tooth in a notched region 10.

The tip 9 is mounted to the blade tooth by a combination of melting by electrical heating of the blade tooth whilst pushing the Stellite towards the tooth. Excess material arising from the melting and tip setting operations is forced out to provide very ragged appearance as at 11. This can particularly be seen from Figure 3. It will also be noted from Figure 3 that the cylindrical form of the Stellite rod necessitates removal of a relatively large volume of Stellite in addition to the blade tooth material shown at 11 in order to attain the requisite planar shape to the tip as is shown in Figure 4. In Figure 4 the tip has its front face 12, its top face 13, and its side faces 14 and 15 machined to the requisite size and angular inter-relationships. The Figure 4 also shows very schematically the original outline of the Stellite rod.

The actual dimensions and angular inter-relationships between the various tip faces will be related to the ultimate required cutting profile for the tips 9 on the teeth. In practice, it has been found that the side faces can be inclined at an angle to the front face and which can conveniently lie within the range of eighty two to eighty eight degrees; with a preferred angle range of eighty three to eighty seven degrees, a particular angle being eighty five degrees.

In addition, the overall width of the front face at the cutting edge thereof will be set by the cutting width dimension considered appropriate in relation to the expected type of material to be cut. A possible range for the width being between two and eight millimetres.

Ideally as will be discussed hereinafter the upper face 16 of the gullet forming region should be as smooth as possible and free from any cracks directed towards the main body.

In otherwords, it is very important to ensure that any machining of this gullet regions results in a very smooth correctly shaped surface for the upper face, and in addition, as has been mentioned such grinding should not have involved any hardening of the blade material in the immediate vicinity of the gullet, tooth and tip.

With a view to dealing with this situation it has been essential to regrind the gullet region after having shaped the tips to the required profiles. Whilst this operation has assisted in avoiding the introduction of incipient cracks it has frequently resulted in unwanted grinding of the tip front face. This problem is further compounded since the presently used grinding wheels are made of such materials that the cooling water or the like used to avoid their overheating during a grinding operation has been found not only to produce the requisite cooling effect but also blueing of the blade body and thus case hardening which as mentioned lesds to the crack formation in the gullets.

To deal with the composite problems mentioned above the standard practice is to use one grinding wheel to grind the top face, a second grinding wheel to grind the fromt face and a further grinding wheel to regrind the gullet region to remove the possibility that the face grinding operation has inadvertently ground into and damage the gullet region.

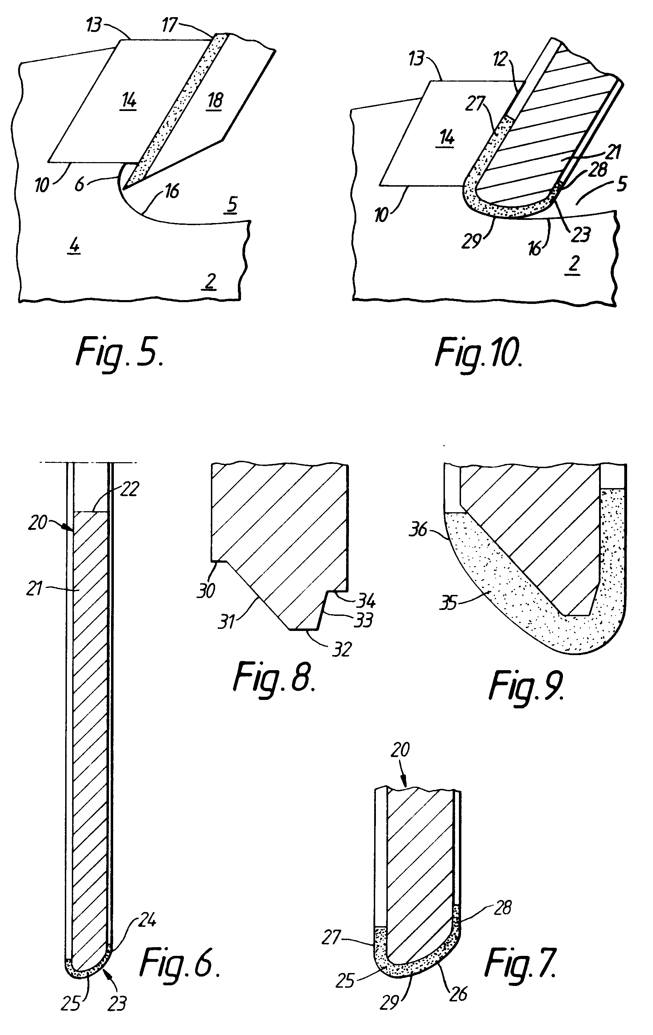

Figure 5 is a schematic side view to a greatly enlarged scale of a single tooth and its associated tip and gullet during grinding of its front face. To do this the working face 17 of a grinding wheel 18 is brought into contact with the tip 9 at the angle necessary to produce the front face 12.

In view of the known form of the formation of the grinding wheel formation 18 the peripheral regions of working face 17 is during the latter stages of its inwards movement during the grinding of the tip front face 12 is frequently brought into contact with the tooth region 6 thereby running the real risk that the grinding wheel damages the gullet face. Because of this as mentioned, the practice has developed of regrinding the gullet faces 16 following front face grinding becomes essential.

As will be appreciated this regrinding introduces further problems in that the accurate setting of a gullet regrinding wheel with respect to already ground tip front faces is a difficult operation for a variety of well known reasons i.e., accurate indexing since it is of great importance that the regrinding of the gullet does not damage the already ground front faces 12.

As is very schematically indicated in Figure 5 the known machining operations have been found lead to touching of the gullet regions and thus the starting of a groove thereinto, and thereby possibly overheating the blade body in the vicinity of the grinding region.

Referring now to Figures 6 and 7 these illustrate a cross section of a first embodiment of the grinding wheel 20 whose grinding material region has been shaped and profiled in accordance with the proposals of the invention.

The wheel 20 incorporates an annular main body 21 having the conventional bore 22 for mounting the grinding wheel on an arbour (not shown).

The peripheral region 23 of the grinding wheel body is generally profiled so as to present a surface 24 which generally conforms to the required shaping and angular relationships required between a tip front face and the adjacent gullet region. These peripheral regions 23 of the grinding wheel body 21 are coated with a layer 24 of Borazon, having a Rockwell Hardness that is greater than that of the material it is intended that the grinding wheel should be required to grind. It is important to note that present day common practice is to use a Borazon coated wheel for cutting efficiency in conjunction with economic considerations when machining Stellite, and that the use of Borazon requires copious supplies of cooling liquid for cooling the wheel. As a consequence the blade teeth and tips are also subjected to a rapid cooling.

As can be seen from the enlarged detail of Figure 7 the thickness of the grinding material layer 25 is such that the outer surface 26 of the layer conforms precisely to the required profile of the front face 12 and the gullet regions 6,7 adjacent to the front face of the tips 9 involved.

The layer 25 encapsulates the complete periphery of the grinding wheel body 21 and includes two generally annular side wall like sections 27 and 28 and an intermediate section 29. The outer surfaces of the three sections combine to provide the outer surface 26 to the layer 25. The side section 27 and the adjacent portion of the intermediae section 29 is such that its thickness is greater than the corresponding region of the other section 28 and provides the main working area of the grinding wheel that is to grind the tip front face.

The thickness of the layer section 27 that is to face the tip front face can be 1.5 millimetres thick and the thickness at the other section 28 1.0 millimetre that is the section that is to grind the gullet region. The intermediate section 29 between the two annular sections 27 and 28 on the wheel faces is progressively thickened to accommodate the thickness variation between the two side wall sections. In the embodiment shown, the working surface is defined by the intersection of two part circular surfaces whose centres of curvature and radii are defined by the actual shape that is required to be ground.

The precise shaping of the working surface 26 is effectively determined by the inter-relationship between the front face angle and the profile of the gullet region adjacent to the tip being machined. It is the usual practice to feed a front face grinding wheel during its cutting stroke at such angle that the working surface 17 thereof lies at the required front face angle for the tip.

In other words the wheel profiling is mainly related to the gullet shape and profile.

A preferred material for the grinding material layer is a Borazon grinding material defined by the technical definition CBN B151-75-RCS.

In practice it is important that the grinding wheel should be able readily to enter into the gullet area so that there is an on-going requirement for the peripheral regions of a grinding wheel should be as narrow as possible compatible with the providion of an adequate thickness for the layer of grinding material. Figure 8 illustrates the peripheral region of a grinding wheel body for a further embodiment of a grinding wheel in accordance with the concepts of the invention in which the peripheral regions of the wheel have been so shaped as to provide an angular shaping comprising surfaces 30,31,32,33, and 34. The surfaces 30 and 34 are generally parallel to the rotational axis of the wheel itself, the surface 31 lies at some fifty degrees to this axis and the surface 33 approximately 80-90 degres to the axis. The grinding material layer 35 applied to the wheel periphery is as generally shown in Figure 9.

Once again the shaping of the outer surface of the layer is such as to provide an appropriate surface 36 for the grinding of the gullets 6 of the teeth. The surface 36 comprise a number of smooth curves merging into each other.

It is to be noted that the shaping of the Figure 8 provides a form of stepped formation which gives support to the grinding material layer peripheral edges.

Figure 10 schematically illustrates the use of the grinding wheel as proposed by the invention. It will be noted that during final phase of the grinding of the tip front face 12 the grinding wheel nests neatly into the gullet region of the tooth so that it is automatically ground at the end of the front face grinding pass of the wheel. In other words the tip front face and gullet region are ground in a single pass of the grinding wheel.

## Claims

1. A planar grinding wheel (2) comprising a main body (7) having at its periphery a region (21) covered by a layer of grinding material which enables the simultaneous grinding of the front face (6) and gullet region (5) of a saw blade tooth (2), characterised in that the peripheral edge region (21) is of an asymmetrically shaped formation providing an angulated profile (30,31,32,33, 34) which is covered with a layer of Borazon to form the grinding layer, in that the Borazon layer (27) has a thickness to one side of the main body periphery that is greater than the thickness of the corresponding layer (23) of the Borazon to the other side of the main body periphery, and in that the intermediate region (29) of the layer progressively changes in thickness in such manner as to accommodate the differences in the thicknesses of the Borazon layers (23,27) to either side of the main body periphery.

2. A planar grinding wheel as claimed in claim 1, and characterised in that said Borazon layer (27) at one side of the main body extends further towards the axis of rotation of the main body than is the case with the Borazon layer (23) at the other side of the main body.

## Patentansprüche

1. Flache Schleifscheibe mit einem Scheibenkörper (20), der an seinem Umfangsgebiet (21) mit einer Schicht aus Schleifmaterial bedeckt ist, die eine gleichzeitige Schleifbearbeitung der Vorderseite (6) eines Zahnes und der anschliessenden Zahnlücke (5) eines Sägeblattes (2) erlaubt,
**dadurch gekennzeichnet, dass** das Umfangsgebiet (21) des Scheibenkörpers ein im Querschnitt assymmetrisches Winkelprofil (30,31,32,33,34) aufweist, das mit einer Schicht aus Borazon beschichtet ist, welches die Schleifschicht bildet, wobei diese Schicht (27) aus Borazon an einer Umfangsseite des Scheibenkörpers dicker ist als die Schicht (23) an der anderen Umfangsseite des Scheibenkörpers, und dass das Uebergangsgebiet (29) der Schicht eine sich allmählich ändernde Dicke aufweist, so dass sie an die Dicke der Borazonschichten (23,27) anschliesst.

2. Flache Schleifscheibe nach Anspruch 1, dadurch gekannzeichnet, dass sich die Borazonschicht (27) an einer Seite des Scheibenkörpers weiter zur Rotationsachse des Scheibenkörpers hin erstreckt als die Borazonschicht (23) an der anderen Seite des Scheibenkörpers.

## Revendications

1. Roue de meulage (2) plane comprenant un élément principal (7) comportant, sur sa périphérie, une zone (21) recouverte d'une couche de matériau d'affutage permettant le meulage simultané du bord d'attaque (6) et du fond (5) d'une dent d'une lame (2), caractérisée en ce que la zone périphérique de l'arête (21) est de forme asymétrique, présentant un profil en angle (30, 31, 32, 33, 34) couvert d'une couche de borazon pour former la couche d'affutage,
en ce que l'épaisseur de la couche de borazon (27) est supérieure sur un côté de la périphérie de l'élément principal à l'épaisseur de la couche de borazon correspondante (23) sur l'autre côté de la périphérie de l'élément principal,
et en ce que l'épaisseur de la région intermédiaire (29) de la couche varie de façon à compenser les différences d'épaisseur des couches de borazon (23, 27) des côtés de la périphérie de l'élément principal.

2. Roue plane de meulage selon la revendication 1, caractérisée en ce que ladite couche de borazon (27) se prolonge selon l'axe de rotation de l'élément principal plus loin sur un des côtés que sur l'autre.
